Europäisches Patentamt

European Patent Office

Office européen des brevets

(19)

(11) Numéro de publication : **0 480 799 A1**

# (12) DEMANDE DE BREVET EUROPEEN

(21) Numéro de dépôt : **91402635.6**

(22) Date de dépôt : **03.10.91**

(51) Int. Cl.⁵ : **A47J 45/08**

(30) Priorité : **09.10.90 FR 9012410**

(43) Date de publication de la demande :
**15.04.92 Bulletin 92/16**

(84) Etats contractants désignés :
**AT BE CH DE DK ES FR GB GR IT LI LU NL SE**

(71) Demandeur : **CORNING FRANCE S.A.**
**44 Avenue de Valvins, B.P. No. 61**
**FR-77211 Avon Cédex (FR)**

(72) Inventeur : **Courtier, Alain Jean-Louis**
**332 rue Jules Ferry**
**F-45200 Amilly (FR)**
Inventeur : **Wozniak, Gilbert Stanislas**
**56 rue du Colonel Fabien**
**F-78500 Sartrouville (FR)**

(74) Mandataire : **Colas, Jean-Pierre et al**
**Cabinet de Boisse 37, avenue Franklin D.**
**Roosevelt**
**F-75008 Paris (FR)**

(54) **Procédé de fixation d'un manche thermiquement isolant sur la queue d'un récipient de cuisson en verre ou vitrocéramique et manche mis en oeuvre dans ce procédé.**

(57) L'invention concerne un procédé de fixation d'un manche isolant (3) sur la queue (2) d'un récipient de cuisson (1) en verre ou vitrocéramiqre, qui consiste à enfiler la queue (2) dans un manche constitué d'un fourreau (4) pourvu intérieurement de moyens de positionnement (7, 8, 10, 11) de la queue tels que cette dernière ne soit en contact qu'avec lesdits moyens, une chambre (12) étant en outre ménagée dans une partie de la cavité interne du fourreau, à remplir cette chambre d'une résine de scellement (14) durcissable, et à durcir cette résine.
Application dans l'industrie des ustensiles culinaires.

FIG.:1

L'invention concerne un procédé de fixation d'un manche thermiquement isolant sur la queue d'un récipient de cuisson en verre ou vitrocéramique et un manche destiné à la mise en oeuvre de ce procédé.

L'invention concerne un nouveau procédé de fixation d'un manche thermiquement isolant sur la queue d'un récipient de cuisson en verre ou vitrocéramique du type dans lequel la queue et le récipient proprement dit forment un ensemble monobloc et dans lequel la queue présente une section transversale telle qu'au moins une de ses dimensions va croissant sur une partie au moins de sa longueur, ce procédé étant caractérisé en ce qu'il consiste :

(1) à fournir un manche constitué d'un fourreau en matière thermiquement isolante ouvert à une de ses extrémités et délimitant une cavité intérieure destinée à recevoir ladite queue, le fourreau étant pourvu intérieurement de moyens de positionnement de ladite queue dans le manche tels que la queue, une fois introduite dans le fourreau, ne soit en contact qu'avec ces moyens de positionnement et qu'au moins certains desdits moyens de positionnement délimitent conjointement avec le fourreau et la queue une chambre entourant la partie de la queue dont au moins une des dimensions va croissant, un orifice étant, en outre, prévu sur le fourreau au niveau de ladite chambre ;

(2) à enfiler la queue dans ledit manche jusqu'à ce que sa progression dans ledit manche soit arrêtée par des moyens de positionnement ;

(3) à remplir ladite chambre avec une résine de scellement durcissable introduite par ledit orifice ; et

(4) à durcir la résine de scellement.

L'invention concerne aussi un manche destiné à la mise en oeuvre du procédé de l'invention, caractérisé en ce qu'il comprend un fourreau en matière thermiquement isolante ouvert à une de ses extrémités et délimitant une cavité intérieure destinée à recevoir la queue du récipient de cuisson, le fourreau étant pourvu intérieurement de moyens de positionnement de ladite queue dans le manche tels que la queue, une fois introduite dans le fourreau, ne soit en contact qu'avec ces moyens de positionnement et qu'au moins certains desdits moyens de positionnement délimitent conjointement avec le fourreau et la queue une chambre entourant la partie de la queue dont au moins une des dimensions va croissant, un orifice étant, en outre, prévu sur le fourreau au niveau de ladite chambre.

Le récipient de cuisson peut être une casserole, une poêle, une sauteuse ou tous autres articles de cuisine analogues.

Selon un mode de réalisation particulier, les moyens de positionnement de la queue dans le manche comportent un premier moyen formant butée situé à proximité de l'extrémité distale du fourreau, un deuxième moyen servant à maintenir espacés la queue et le fourreau, situé à une position intermédiaire entre les extrémités distale et proximale du fourreau, et un troisième moyen situé à l'extrémité proximale du fourreau servant à assurer l'étanchéité entre la queue et le fourreau et servant à délimiter conjointement avec le deuxième moyen, le fourreau et la queue, une fois celle-ci introduite dans le manche, ladite chambre remplissable de résine de scellement.

Avantageusement, le troisième moyen est constitué d'une bague torique logée dans une gorge prévue au voisinage de l'extrémité proximale du fourreau.

Par "proximale", on désigne la partie du fourreau proche de son extrémité ouverte par laquelle on enfile la queue dans le manche, et, par "distale", on désigne la partie du fourreau opposée à la partie proximale.

Le manche de l'invention peut être aisément fabriqué par moulage de deux parties ou demi-coques en matière plastique appropriée que l'on assemble ensuite, par exemple par soudage ultrasonique ou collage.

La description qui va suivre faite en se référant au dessin fera bien comprendre l'invention.

Sur le dessin :

La figure 1 est une vue de dessus, avec arrachement partiel, du manche de l'invention monté sur une queue de récipient de cuisson ;

La figure 2 est une vue de côté de ce manche ; et

La figure 3 est une vue en coupe longitudinale selon la ligne III-III de la figure 1, dudit manche.

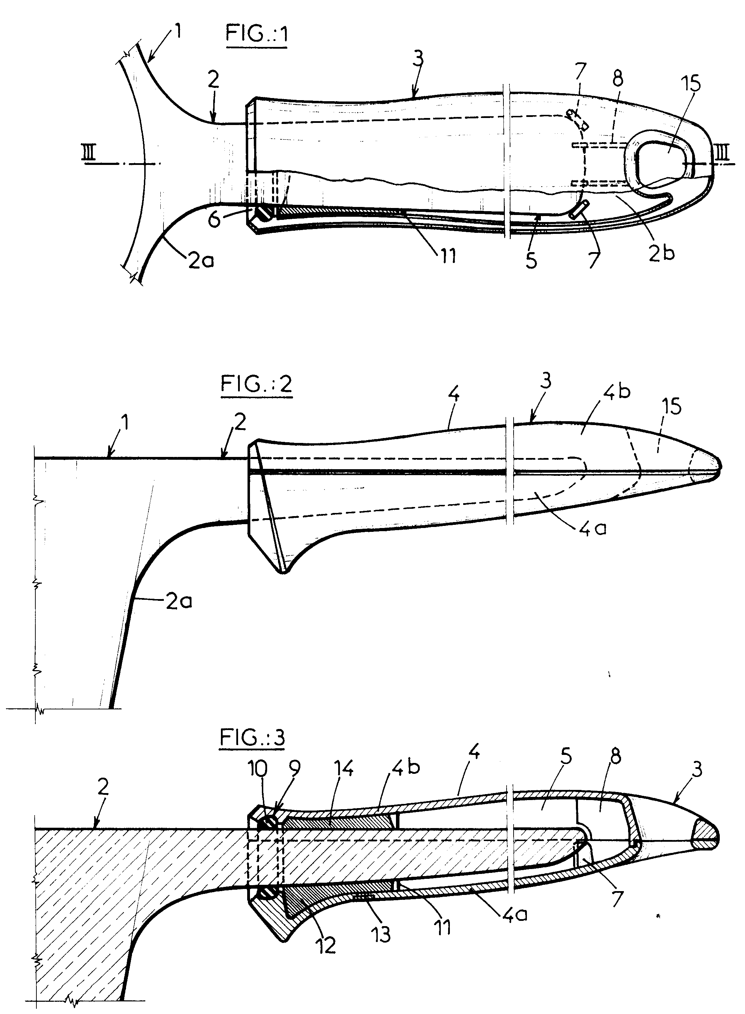

Sur les figures 1 à 3, on voit une casserole 1 en vitrocéramique pourvue d'une queue 2 d'un seul tenant avec le corps de casserole et dont la largeur va croissante depuis sa racine 2a jusqu'à son extrémité libre 2b tandis que son épaisseur va en s'amincissant. Sur la queue 2 est fixé un manche 3 en matière plastique thermiquement isolante, par exemple en polyamide-imide, éventuellement chargé de fibres de verre. Le manche 3 est formé d'un fourreau 4 formé de deux demi-coques 4a et 4b réunies par soudage et délimitant une cavité intérieure 5. Le fourreau 4 est ouvert à son extrémité proximale 6 pour permettre d'enfiler la queue dans le manche. Le fourreau est pourvu intérieurement, à proximité de son extrémité distale, de deux butées latérales 7 venues de moulage avec la demi-coque 4a et de deux butées supérieure 8 venues de moulage avec la demi-coque 4b servant à positionner l'extrémité libre 2b de la queue, tandis qu'il est pourvu intérieurement, à proximité de son extrémité proximale, d'une gorge 9 recevant un joint torique 10 assurant l'étanchéité entre le fourreau et la queue et le centrage de la queue dans le fourreau. Le fourreau comporte intérieurement, en outre, une nervure interne 11 située à une position intermédiaire entre les butées 7, 8, d'une part, et la gorge 9 et le joint 10, d'autre part, et épousant la forme de la section de la queue à cet endroit. La nervure 11 sert à guider la queue et à la maintenir espacée du fourreau pendant la prise du manche qui risquerait autrement d'être écrasé ou déformé sous la contrainte exercée. Le fourreau 4, la nervure 11 et le joint 10 délimitent une chambre 12 séparée du reste de la cavité 5. Un orifice obturable 13 est prévu sur le fourreau à l'emplacement de la chambre 12. La chambre 12 est remplie d'une résine durcie 14 qui assure le scellement du manche sur la queue du récipient.

Enfin le fourreau est pourvu à son extrémité libre d'un trou 15 pouvant servir à accrocher le récipient à un crochet, par exemple lorsqu'on désire ranger ledit récipient.

Le montage et la fixation du manche de l'invention s'opèrent facilement comme suit :
 – le joint 10 est enfilé sur la queue 2,
 – le fourreau est enfilé sur la queue jusqu'à ce que cette dernière vienne au contact des butées 7, 8, le joint 10 prenant sa place dans la gorge 9 au cours de cette opération,
 – par l'orifice 13, on introduit dans la chambre 12 une résine durcissable, par exemple une résine de silicone, et on laisse durcir cette résine de façon qu'elle scelle la queue au manche, la résine durcie assurant, du fait de la largeur croissante de la queue de sa racine à son extrémité libre, un blocage mécanique excellent. La résine parfait en même temps l'étanchéité assurée par le joint 10.

Il va de soi que le mode de réalisation décrit n'est qu'un exemple et qu'on pourrait le modifier, notamment par substitution d'équivalents techniques, sans sortir pour cela du cadre de l'invention.

**Revendications**

1. Procédé de fixation d'un manche (3) thermiquement isolant sur la queue (2) d'un récipient de cuisson (1) en verre ou vitrocéramique du type dans lequel la queue et le récipient proprement dit forment un ensemble monobloc et dans lequel la queue présente une section transversale telle qu'au moins une de ses dimensions va croissant sur une partie au moins de sa longueur, ce procédé étant caractérisé en ce qu'il consiste :

(1) à fournir un manche constitué d'un fourreau (4) en matière thermiquement isolante ouvert à une de ses extrémités et délimitant une cavité intérieure (5) destinée à recevoir ladite queue, le fourreau étant pourvu intérieurement de moyens de positionnement (7, 8, 10 et 11) de ladite queue dans le manche tels que la queue, une fois introduite dans le fourreau, ne soit en contact qu'avec ces moyens de positionnement et qu'au moins certains desdits moyens de positionnement délimitent conjointement avec le fourreau et la queue une chambre (12) entourant la partie de la queue dont au moins une des dimensions va croissant, un orifice (13) étant, en outre, prévu sur le fourreau au niveau de ladite chambre ;

(2) à enfiler la queue dans ledit manche jusqu'à ce que sa progression dans ledit manche soit arrêtée par des moyens de positionnement ;

(3) à remplir ladite chambre avec une résine de scellement (14) durcissable introduite par ledit orifice ; et

(4) à durcir la résine de scellement.

2. Procédé selon la revendication 1, caractérisé en ce que les moyens de positionnement de la queue dans le manche comportent un premier moyen formant butée situé à proximité de l'extrémité distale du fourreau, un deuxième moyen servant à maintenir espacés la queue et le fourreau, situé à une position intermédiaire entre les extrémités distale et proximale du fourreau, et un troisième moyen situé à l'extrémité proximale du fourreau servant à assurer l'étanchéité entre la queue et le fourreau et servant à délimiter conjointement avec le deuxième moyen, le fourreau et la queue, une fois celle-ci introduite dans le manche, ladite chambre remplissable de résine de scellement.

3. Procédé selon la revendication 2, caractérisé en ce que le troisième moyen est constitué d'une bague torique logée dans une gorge prévue au voisinage de l'extrémité proximale du fourreau.

4. Manche fixable sur la queue d'un récipient de cuisson en verre ou vitrocéramique du type dans lequel la queue et le récipient proprement dit forment ensemble monobloc et dans lequel la queue présente une section transversale telle qu'au moins une de ses dimensions va croissant sur une partie au moins de sa longueur, caractérisé en ce qu'il comprend un fourreau (4) en matière thermiquement isolante ouvert à une de ses extrémités et délimitant une cavité intérieure (5) destinée à recevoir la queue (2) du récipient de cuisson, le fourreau étant pourvu intérieurement de moyens de positionnement (7, 8, 10 et 11) de ladite queue dans le manche tels que la queue, une fois introduite dans le fourreau, ne soit en contact qu'avec ces moyens de positionnement et qu'au moins certains desdits moyens de positionnement délimitent conjointement avec le fourreau et la queue une chambre (12) entourant la partie de la queue dont au moins une des dimensions va croissant, un orifice (13) étant, en outre, prévu sur le fourreau au niveau de ladite chambre.

5. Manche selon la revendication 4, caractérisé en ce que les moyens de positionnement de la queue dans le manche comportent un premier moyen formant butée situé à proximité de l'extrémité distale du fourreau, un deuxième moyen servant à maintenir espacés la queue et le fourreau, situé à une position intermédiaire entre les extrémités distale et proximale du fourreau, et un troisième moyen situé à l'extrémité proximale du fourreau servant à assurer l'étanchéité entre la queue et le fourreau et servant à délimiter conjointement avec le deuxième moyen, le fourreau et la queue, une fois celle-ci introduite dans le manche, ladite chambre remplissable de résine de scellement.

6. Manche selon la revendication 5, caractérisé en ce que le troisième moyen est constitué d'une bague torique logée dans une gorge prévue au voisinage de l'extrémité proximale du fourreau.

7. Manche selon l'une quelconque des revendications 4 à 6, caractérisé en ce qu'il est formé de deux parties ou demi -coques en matière plastique moulées, puis assemblées ensemble.

FIG.:1

FIG.:2

FIG.:3

EP 0 480 799 A1

Office européen
des brevets

# RAPPORT DE RECHERCHE EUROPEENNE

Numero de la demande

EP    91 40 2635

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 209 877 (COLASENT)<br>* colonne 2, ligne 29 – colonne 5, ligne 5; figures * | 1,2,4,5 | A47J45/08 |
| A | DE-A-1 454 063 (MILL)<br>* page 1, ligne 1 – page 4, ligne 22; figures 1,2,5,7 * | 1,4 | |
| A | FR-A-1 066 506 (SOCIETE D'EMBOUTISSAGE DE BOURGOGNE)<br>* le document en entier * | 1,4,7 | |
| A | FR-A-2 395 959 (CORNING GLASS WORKS)<br>* page 1, ligne 26 – page 2, ligne 3; figure 2 * | 1 | |
| A | CH-A-145 404 (EGGENSCHWILER) | | |

DOMAINES TECHNIQUES
RECHERCHES (Int. Cl.5)

A47J

Le présent rapport a été établi pour toutes les revendications

| Lieu de la recherche | Date d'achèvement de la recherche | Examinateur |
|---|---|---|
| LA HAYE | 06 JANVIER 1992 | BODART P. |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

& : membre de la même famille, document correspondant

EPO FORM 1503 03.82 (P0402)

6